(19) Europäisches Patentamt
European Patent Office
Office européen des brevets

(11) EP 0 659 805 B1

(12) **EUROPÄISCHE PATENTSCHRIFT**

(45) Veröffentlichungstag und Bekanntmachung des Hinweises auf die Patenterteilung:
**10.03.1999 Patentblatt 1999/10**

(51) Int Cl.$^6$: **C08G 77/48**

(21) Anmeldenummer: **94120381.2**

(22) Anmeldetag: **22.12.1994**

# (54) Lösliche Organopolysiloxan-Radikalmakroinitiatoren zur Pfropfcopolymerisation

Soluble organopolysiloxane radical macroinitiators for graft copolymerisation

Macroinitiateurs radicalaires à base de polysiloxanes solubles pour la copolymérisation par greffage

(84) Benannte Vertragsstaaten:
**AT BE DE ES FR GB IT NL**

(30) Priorität: **23.12.1993 DE 4344309**

(43) Veröffentlichungstag der Anmeldung:
**28.06.1995 Patentblatt 1995/26**

(73) Patentinhaber: **Wacker-Chemie GmbH**
**81737 München (DE)**

(72) Erfinder:
- **Dauth, Jochen, Dr.**
**D-84489 Burghausen (DE)**
- **Oleggini, Catherine**
**F-01100 Oyonnax (FR)**
- **Deubzer, Bernward, Dr.**
**D-84489 Burghausen (DE)**

(56) Entgegenhaltungen:
**EP-A- 0 539 901**

- **DATABASE WPI Derwent Publications Ltd., London, GB; AN 86-336164 & JP-A-61 252 230 (UEDA A.) 10. November 1986**
- **DATABASE WPI Derwent Publications Ltd., London, GB; AN 88-151540 & JP-A-63 092 628 (NIPPON OILS & FATS KK.) 23. April 1988**
- **DATABASE WPI Derwent Publications Ltd., London, GB; AN 87-167570 & JP-A-62 100 533 (NIPPON OILS & FATS KK.) 11. Mai 1987**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft teilvernetzte, radikalbildende Gruppen aufweisende, in organischen Lösungsmitteln lösliche Organopolysiloxane, ein basenkatalysiertes Verfahren zu deren Herstellung, Pfropfcopolymerisate aus den erfindungsgemäßen Organopolysiloxanen als Radikalmakroinitiatoren und radikalisch polymerisierbaren organischen Monomeren und ein Verfahren zur Herstellung der Pfropfcopolymerisate.

Verfahren zur basenkatalysierten Herstellung von Organopolysiloxanharzen und -elastomeren sind bereits bekannt. Beispielsweise ist in EP-B-42 208 ein Verfahren zur Herstellung von Organopolysiloxanharzen beschrieben, wobei Alkoxysilan und Hexamethyldisilazan zu einer Mischung aus Wasser und Alkohol dosiert werden. Die Verwendung verschiedener Mengen an Wasser und die Wahl des Verhältnisses der molaren Anteile von monofunktionellen Einheiten zu tetrafunktionellen Einheiten ermöglicht hier die Kontrolle des Molekulargewichtes der Harze.

Eine Möglichkeit der Herstellung von Pfropfcopolymeren besteht darin, ein Polymer, welches eine zur Reaktion befähigte funktionelle Endgruppe trägt, mit reaktiven Monomeren zu pfropfen. Dies wird als "grafting onto"-Verfahren bezeichnet. Beispielsweise in EP-A-539 901 werden Vinylmonomere nach dem Emulsionspolymerisationsverfahren auf ein emulgiertes, Anbindungsstellen aufweisendes Organopolysiloxan gepfropft. Die Anbindungsstellen werden durch in das Organopolysiloxan einkondensierte Dialkoxysilane, welche einen radikalbildenden Rest enthalten, erzeugt. Bei diesem "grafting onto"-Verfahren wird mittels eines externen Redox-Initiatorsystems eine Homopolymerisation der Organomonomeren gestartet, die wachsenden Organopolymerketten binden hierbei an die Anbindungsstellen der Organopolysiloxan-Pfropfgrundlage an. Ein offensichtlicher Nachteil dieses Verfahrens ist, daß die Anbindung des Organopolymers an das Polysiloxan nicht zwingend gegeben ist, und somit ein beträchtlicher Teil des Organopolymers nicht auf das Polysiloxan gepfropft wird, sondern als nicht angebundenes Homopolymerisat vorliegt. Weiterhin nachteilig am Verfahren des "grafting onto" ist, daß in Folge intramolekularer Verknüpfungen, insbesondere Verschlaufungen durch Mehrfachanbindung der Organopolymerkette am siliciumorganischen Polymerkern, unkontrolliert aufgebaute Pfropfcopolymere entstehen, was sich durch strukturelle Charakterisierung solcher Pfropfcopolymerer, z. B. mittels statischer und dynamischer Lichtstreuung, belegen läßt.

In der JP 63092628 sind lineare Polysiloxane beschrieben, die radikalbildende Peroxygruppen aufweisen. Diese Polysiloxane werden als Radikalpolymerisationsinitiatoren eingesetzt. Die dort beschriebenen Polysiloxane dissoziieren zu linearen Polysiloxanen mit einer radikalischen Initiatorstelle, an die Vinylmonomer anpolymerisiert. Es wird nur lineares Pfropfcopolymerisat gebildet.

Es bestand die Aufgabe, Organopolysiloxanharze und -elastomere mit radikalbildenden Gruppen bereitzustellen, die auf einfache Weise und gut reproduzierbar hergestellt werden können und mit welchen durch eine radikalische Polymerisation Pfropfcopolymerisate synthetisiert werden können, welche die obengenannten Nachteile der bekannten Pfropfcopolymerisate, nämlich hoher Anteil an Organopolymer-Homopolymerisat und unkontrollierter Aufbau, nicht aufweisen.

Die Erfindung betrifft teilvernetzte, radikalbildende Gruppen aufweisende Organopolysiloxane, aufgebaut aus 0,2 bis 50,0 Gew.-% Einheiten der allgemeinen Formel

$$[R_aSi(O_{(3-a)/2})\text{-}R^1\text{-}X\text{-}R^1\text{-}Si(O_{(3-a)/2})R_a] \qquad \textbf{(1)},$$

0 bis 80,0 Gew.-% Einheiten der allgemeinen Formel

$$[R^2{}_3SiO_{1/2}] \qquad \textbf{(2)},$$

0 bis 99,3 Gew.-% Einheiten der allgemeinen Formel

$$[R^2{}_2SiO_{2/2}] \qquad \textbf{(3)},$$

0 bis 99,8 Gew.-% Einheiten der allgemeinen Formel

$$[R^2SiO_{3/2}] \qquad \textbf{(4)}$$

und 0 bis 80,0 Gew.-% Einheiten der allgemeinen Formel

$$[SiO_{4/2}] \quad \textbf{(5)},$$

wobei

**R** gleiche oder verschiedene einwertige SiC-gebundene, gegebenenfalls substituierte $C_1$- bis $C_{18}$-Kohlenwasserstoffreste,

**$R^1$** gleiche oder verschiedene zweiwertige SiC-gebundene, gegebenenfalls substituierte $C_1$- bis $C_{18}$-Kohlenwasserstoffreste, welche durch zweibindige, beidseitig an Kohlenstoffatome gebundene Reste aus der Gruppe -O-, -COO-, -OOC-, $-CONR^2-$, $-NR^2CO-$, $-NR^2-$ und -CO- unterbrochen sein können,

**$R^2$** ein Wasserstoffatom oder einen Rest **R**,

**X** einen Rest aus der Gruppe -N=N-, -O-O-, -S-S- und $-C(C_6H_5)_2-C(C_6H_5)_2-$, und

**a** die Werte 0, 1 oder 2 bedeuten

mit der Maßgabe, daß die Summe der Einheiten der allgemeinen Formeln (4) und (5) mindestens 0,5 Gew.-% beträgt und daß in 100 ml Toluol bei 20 °C mindestens 15 g der Organopolysiloxane löslich sind.

Beispiele für unsubstituierte Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentyl-rest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Alkenylreste, wie der Vinyl-, Allyl-, n-5-Hexenyl-, 4-Vinylcyclohexyl- und der 3-Norbornenylrest; Cycloalkylreste, wie Cyclopentyl-, Cyclohexyl-, 4-Ethylcyclohexyl-, -, Cycloheptylreste, Norbornylreste und Methylcyclohexylreste; Arylreste, wie der Phenyl-, Biphenylyl-, Naphthyl-, Anthryl- und Phenanthrylrest; Alkarylreste, wie o-, m-, p-Tolylreste, Xylylreste und Ethylphenylreste; Aralkylreste, wie der Benzylrest, der alpha- und der β-Phenylethylrest.

Beispiele für substituierte Kohlenwasserstoffreste als Rest R sind halogenierte Kohlenwasserstoffreste, wie der Chlormethyl-, 3-Chlorpropyl-, 3-Brompropyl-, 3,3,3-Trifluorpropyl- und 5,5,5,4,4,3,3-Heptafluorpentylrest sowie der Chlorphenyl-, Dichlorphenyl- und Trifluortolylrest; Mercaptoalkylreste, wie der 2-Mercaptoethyl- und 3-Mercaptopropylrest; Cyanoalkylreste, wie der 2-Cyanoethyl- und 3-Cyanopropylrest; Aminoalkylreste, wie der 3-Aminopropyl-, N-(2-Aminoethyl)-3-aminopropyl- und N-(2-Aminoethyl)-3-amino-(2-methyl)propylrest; Aminoarylreste, wie der Aminophenylrest; Acyloxyalkylreste, wie der 3-Acryloxypropyl- und 3-Methacryloxypropylrest; Hydroxyalkylreste, wie der Hydroxypropylrest und Reste der Formeln

```
     O
    / \
CH2-CHCH2O(CH2)3- und HOCH2CH(OH)CH2SCH2CH2-.
```

Bei dem Rest **R** handelt es sich besonders bevorzugt um den Methyl-, Ethyl-, n-Propyl-, Vinyl-, 3-Norbornenyl-, n-5-Hexenyl-, Tolyl- und Phenylrest, insbesondere um den Methyl- und den Vinylrest.

Beispiele für Substituenten an den zweiwertigen Kohlenwasserstoffresten $R^1$ sind Halogenatome und $C_1$-$C_6$-Alkoxyreste, Beispiele für zweiwertige Kohlenwasserstoffreste **$R^1$** sind gesättigte, verzweigte oder unverzweigte Alkylenreste wie der Methylen- und Ethylenrest, sowie Propylen-, Butylen-, Pentylen-, 1-Methylpentylen-, Hexylen-, Cyclohexylen- und Octadecylenreste oder ungesättigte Alkylen- oder Arylenreste, wie der Hexenylenrest, Phenylenreste, wie der 2-Chlor-1,4-phenylenrest und insbesondere Reste der Formeln (6)

$$-(CH_2)_3N(R^3)-C(O)-(CH_2)_2-C(CN)(CH_3)- \quad \textbf{(6)},$$

in der

**$R^3$** ein Wasserstoffatom oder gleiche oder verschiedene einwertige SiC-gebundene, gegebenenfalls substituierte $C_1$-$C_6$-Kohlenwasserstoffreste bedeutet und (7)

$$-(CH_2)_3-O-C(O)-(CH_2)_2-C(O)- \qquad \textbf{(7),}$$

Bevorzugte Reste X sind -N=N- und -O-O-.

Besonders bevorzugte Einheiten der allgemeinen Formel (1) fallen unter die allgemeine Formel (1a)

$$[(CH_3)_aSi(O_{(3-a)/2})-(CH_2)_3-N(R^3)-C(O)-(CH_2)_2-C(CN)\ (CH_3)-N=]_2$$

in der **a** und $\mathbf{R^3}$ die vorstehenden Bedeutungen aufweisen.

Vorzugsweise enthalten die erfindungsgemäßen Organopolysiloxane 0,5 bis 20,0 Gew.-%, insbesondere 1,0 bis 10,0 Gew.-% Einheiten der allgemeinen Formel (1).

Die erfindungsgemäßen Organopolysiloxane sind vorzugsweise Organopolysiloxanharze oder -elastomere, die vorzugsweise als Reste $\mathbf{R^2}$ teilweise Wasserstoffatome, Methyl-, Vinyl- oder Epoxidreste enthalten.

Vorzugsweise sind in 100 ml Toluol bei 20°C mindestens 30 g der erfindungsgemäßen Organopolysiloxane löslich. Die erfindungsgemäßen Organopolysiloxane sind auch in anderen organischen Lösungsmitteln, wie Dioxan und Tetrahydrofuran (THF) gut löslich und sind deshalb sehr gut geeignet, um als Radikalmakroinitiatoren bei der Pfropfpolymerisation in Lösung eingesetzt zu werden.

Die mittleren Molmassen der erfindungsgemäßen Organopolysiloxane liegen bevorzugt bei $10^3$ bis $10^5$ g/Mol, insbesondere $5 \cdot 10^3$ bis $5 \cdot 10^4$ g/Mol.

Die erfindungsgemäßen teilvernetzten, radikalbildende Gruppen aufweisenden Organopolysiloxane werden vorzugsweise hergestellt durch Umsetzung einer Mischung aus den Komponenten

A) Organosilanen der allgemeinen Formel

$$R_aSi((OR^4)_{3-a})-R^1-X-R^1-Si(OR^4)_{3-a}R_a \qquad \textbf{(8),}$$

B) Organosiliciumverbindungen, die ausgewählt werden aus

B1) Organosilanen der allgemeinen Formel

$$R^2{}_bSi(OR^4)_{(4-b)} \qquad \textbf{(9),}$$

und

B2) Organosiloxanen aus Einheiten der allgemeinen Formel

$$R^2{}_c(OR^4)_dSiO_{(4-c-d)/2}, \qquad \textbf{(10),}$$

C) mindestens 0,5 Mol Wasser pro Mol Alkoxygruppen in den Komponenten A und B und gegebenenfalls

D) mit Wasser mischbarem Lösungsmittel,

E) in Gegenwart von Ammoniak oder primärem oder sekundärem $C_1$-$C_4$-Alkylamin oder einer Verbindung, welche mit Wasser Ammoniak oder primäres oder sekundäres $C_1$-$C_4$-Alkylamin freisetzt,

wobei in den allgemeinen Formeln (8) bis (10)

| | |
|---|---|
| $\mathbf{R^4}$ | die Bedeutungen von $\mathbf{R^2}$ aufweist, |
| **b, c** und **d** | jeweils die Werte 0, 1, 2 oder 3 bedeuten, und |
| **R**, $\mathbf{R^1}$, $\mathbf{R^2}$, **X** und **a** | die vorstehenden Bedeutungen aufweisen, mit der Maßgabe, daß Komponente B mindestens 0,01 Mol Alkoxygruppen pro Mol Siliciumatome aufweist. |

Die durch das erfindungsgemäße Verfahren hergestellten Organopolysiloxane weisen ein einheitlicheres Molekulargewicht auf, als mit Hilfe von sauren Katalysatoren hergestellte Organopolysiloxane. Außerdem bewirken saure Katalysatoren einen Zerfall der Initiatorgruppen der allgemeinen Formeln (1) und (8).

Beispiele für Rest $\mathbf{R^4}$ sind die für R angegebenen Beispiele. Bei dem Rest $\mathbf{R^4}$ handelt es sich bevorzugt um Alkylgruppen mit 1 bis 6 Kohlenstoffatom, welche mit vorzugsweise $C_1$-$C_6$-Alkyloxygruppen oder Hydroxygruppen substituiert sein können.

Bei dem Rest $\mathbf{R^4}$ handelt es sich besonders bevorzugt um den Methyl-, Ethyl-, n-Propyl, iso-Propyl- und Hexylrest, insbesondere um den Methyl- und Ethylrest.

Beispiele für im erfindungsgemäßen Verfahren einsetzbare Organosilane B1 der allgemeinen Formel (9) sind Tetra-Tetraethoxysilan, Tetraethoxysilan, Tetra-n-propoxysilan, Methyltrimethoxysilan, Vinyltrimethoxysilan, 3-Mercaptopropyltrimethoxysilan, 3-Chlorpropyltrimethoxysilan, Phenyltrimethoxysilan, o-, m-, p-Tolyltrimethoxysilan, Propyltrimethoxysilan, Methyltriethoxysilan, Vinyltriethoxysilan, Vinyldimethylethoxysilan, 3-Mercaptopropyltriethoxysilan, Propyltrimethoxysilan, Dimethyldiethoxysilan, Dimethyldimethoxysilan und Trimethylethoxysilan, wobei Tetraethoxysilan, Methyltrimethoxysilan, Dimethyldiethoxysilan, Vinyldimethylethoxysilan, Methyltriethoxysilan, Phenyltriethoxysilan, o-, m-, p-Tolyltriethoxysilan und Propyltriethoxysilan bevorzugt und Tetraethoxysilan besonders bevorzugt eingesetzt werden.

Beispiele für im erfindungsgemäßen Verfahren einsetzbare wasserstoffhaltigen Organosilane der allgemeinen Formel (9) sind Trihydrogenethoxysilan, Dihydrogenmethylethoxysilan, Hydrogendimethylethoxysilan, Hydrogenmethyldiethoxysilan und Hydrogenphenyldiethoxysilan.

Die im erfindungsgemäßen Verfahren einsetzbaren Organosiloxane B2 weisen vorzugsweise höchstens 15 Einheiten der allgemeinen Formel (10) auf. Beispiele für Organosiloxane B2 sind lineare Organosiloxane, wie Disiloxane, beispielsweise Hexamethyldisiloxan, 1,3-Diphenyltetramethyldisiloxan, 1,3-Bis(n-5-hexenyl)tetramethyldisiloxan, 1,3-Divinyltetramethyldisiloxan, vorzugsweise Hexamethyldisiloxan und 1,3-Divinyltetramethyldisiloxan und cyclische Organopolysiloxane aus 3 bis 8, vorzugsweise 4 oder 5 Einheiten der allgemeinen Formel (10), wie Hexamethylcyclotrisiloxan, Octamethylcyclotetrasiloxan und Dekamethylcyclopentasiloxan.

Beispiele für im erfindungsgemäßen Verfahren einsetzbare wasserstoffhaltige Organosiloxane B2 sind Dihydrogentetramethyldisiloxan, Tetrahydrogendimechyldisiloxan, Dihydrogentetraphenyldisiloxan, Trihydrogentrimethylcyclotrisiloxan, Tetrahydrogentetramethylcyclotetrasiloxan und Pentahydrogenpentamethylcyclopentasiloxan.

Die Komponente B kann auch monomere und polymere Silikate enthalten. Dies ist insbesondere für die Herstellung von Harzen der Fall. Bevorzugte Silikate sind Methylorthosilikat, Ethylorthosilikat, Methylpolysilikat und Ethylpolysilikat, wobei die Silikate Alkoxyreste enthalten.

Der Gehalt an Alkoxygruppen der Komponente B beträgt vorzugsweise 0,5 - 2 Mol, insbesondere 0,65 - 1,5 Mol, pro Mol Siliciumatome.

Als Komponente C werden vorzugsweise mindestens 0,5 Mol, insbesondere 0,5 bis 0,8 Mol Wasser pro Mol Alkoxygruppen der Komponenten A und B eingesetzt. Ein hoher Anteil Wasser pro Mol Alkoxygruppen der Komponenten A und B bewirkt eine Zunahme der Gelanteile.

Als Komponente D werden vorzugsweise organische Lösungsmittel eingesetzt, die sich bei 20°C mit Wasser im Volumenverhältnis 1 : 1 homogen vermischen. Beispiele für als Komponente D geeignete Lösungsmittel sind einwertige und mehrwertige Alkohole, wie Methanol, Ethanol, n-Propanol, iso-Propanol und Ethylenglykol; Ether, wie Dioxan und Tetrahydrofuran; Amide, wie Dimethylformamid; Dimethylsulfoxid und Sulfolan oder Gemische dieser Lösungsmittel.

Besonders bevorzugt sind Lösungsmittel mit einem Siedepunkt bzw. Siedebereich von bis zu 120° C bei 0,1 MPa, insbesondere die vorstehenden einwertigen Alkohole.

Vorzugsweise wird Komponente D in einer solchen Menge zugesetzt, daß je nach System der Gelanteil gleich 0 ist, vorzugsweise 20 bis 300 Gew.-%, insbesondere 50 bis 100 Gew.-%, bezogen auf den Silananteil in Komponente B.

Als Verbindungen der Komponente E, welche mit Wasser Ammoniak oder primäres oder sekundäres $C_1$-$C_4$-Alkylamin freisetzen, werden die Verbindungen der allgemeinen Formeln (11) bis (15)

$$R^5{}_nSiZ_{4-n}, \quad (11)$$

$$(R^5{}_3Si)_2NH, \quad (12)$$

$$(R^5{}_2SiNH)_x, \quad (13)$$

$$(R^5{}_3Si)_2NR^6 \quad (14)$$

und

$$(R^5{}_2SiNR^6)_y, \qquad (15)$$

wobei

**$R^5$** ein Wasserstoffatom, einen $C_1$- bis $C_4$-Alkylrest oder Vinylrest,
**$R^6$** einen $C_1$- bis $C_4$-Alkylrest,
**Z** die Gruppe $-NHR^6$ oder $NR^6_2$,
**n** die Werte 2 oder 3,
**x** ganze Zahlen von 3 bis 6 und
**y** ganze Zahlen von 1 bis 12 bedeuten,

bevorzugt eingesetzt.

Besonders bevorzugt ist der Einsatz von Ammoniak oder Verbindungen der allgemeinen Formel (12), insbesondere von Hexamethyldisilazan und Divinyltetramethyldisilazan.

Ammoniak oder primäres oder sekundäres $C_1$-$C_4$-Alkylamin wirken im erfindungsgemäßen Verfahren als Katalysator und werden vorzugsweise nach der Umsetzung, insbesondere durch Behandlung unter vermindertem Druck entfernt.

Vorzugsweise werden im erfindungsgemäßen Verfahren 0,005 - 0,5, insbesondere 0,05 - 0,3 Mol Ammoniak oder primäres oder sekundäres $C_1$-$C_4$-Alkylamin oder Verbindungen, welche mit Wasser die vorstehenden Mengen Ammoniak oder primäres $C_1$-$C_4$-Alkylamin freisetzen, pro 1 Mol der Komponente B eingesetzt.

Durch das erfindungsgemäße Verfahren können beispielsweise Organopolysiloxanelastomere und -harze durch Wahl der eingesetzten Komponenten B und E hergestellt werden. Silane der vorstehenden allgemeinen Formel (9), bei denen (4-b) = w und Siloxane der vorstehenden allgemeinen Formel (10), bei denen (4-c-d) = w, führen in den erfindungsgemäßen teilvernetzten, radikalbildende Gruppen aufweisenden Organopolysiloxanen zu Einheiten der allgemeinen Formeln (2), (3), (4) bzw. (5) und werden als M-, D-, T- bzw. Q-Einheiten bezeichnet, wenn w = 1, 2, 3 bzw. 4. Das erfindungsgemäße Verfahren eignet sich besonders für die Herstellung von Elastomeren und Siliconharzen, insbesondere von MQ-Harzen, bei denen das M/Q-Verhältnis vorzugsweise 0,4 : 1 bis 1,5 : 1, insbesondere 0,5 : 1 bis 1 : 1 beträgt. Es können beispielsweise transparente, in organischen Lösungsmitteln lösliche, monomodal verteilte MQ-Harze hergestellt werden, deren Molekulargewichte vorzugsweise von 4 000 g/mol bis 25 000 g/mol einstellbar sind. Derartige MQ-Harze weisen bei der Herstellung einen Gelanteil von weniger als 2 Gew.-%, bezogen auf die theoretische Ausbeute auf.

Das erfindungsgemäße Verfahren wird vorzugsweise bei -20°C bis 50°C, insbesondere bei 0°C bis 40°C durchgeführt. Vorzugsweise werden nach der Umsetzung alle flüchtigen Anteile wie Wasser und Lösungsmittel, wie Ethanol, vorzugsweise unter vermindertem Druck entfernt.

Vorzugsweise werden bei dem erfindungsgemäßen Verfahren die Komponenten A, B und E vorgelegt und C und D zudosiert. Vorzugsweise wird unter Lichtauschluß gearbeitet.

Im Anschluß an die Umsetzung der Komponenten A bis E können die erhaltenen Organopolysiloxane, insbesondere die Harze, zur Senkung des Gehalts an $-OR^4$ Gruppen, insbesondere des Alkoxygruppengehalts, sauer oder basisch nachkondensiert werden. Dabei kann auch mit starken Basen, wie Alkali- und Erdalkalihydroxiden als Kondensationskatalysatoren in organischen Lösungsmitteln, vorzugsweise Toluol, gearbeitet werden. Die Nachkondensation zur Senkung des Gehalts an Alkoxygruppen ist auch bei wasserstoffhaltigen Organopolysiloxanen möglich, wenn wasserfrei gearbeitet wird.

Die erfindungsgemäßen Organopolysiloxane werden vorzugsweise als Radikalmakroinitiatoren für die Pfropfcopolymerisation von ethylenisch ungesättigten organischen Monomeren eingesetzt.

Ein weiterer Gegenstand der Erfindung ist ein Verfahren zur Herstellung von Pfropfcopolymerisaten, bei dem

95 bis 5 Gew.-% an erfindungsgemäßen Organopolysiloxanen mit
5 bis 95 Gew.-% an ethylenisch ungesättigte Monomeren umgesetzt werden.

Bei dem erfindungsgemäßen Verfahren trägt das zu pfropfende Polymer eine reaktive Gruppierung, die mit dem zur Pfropfung zugesetzten Monomer reagiert. Dieses Verfahren wird als "grafting from"-Verfahren bezeichnet. Bei einem Start der Polymerisation wachsen die Pfropfäste direkt auf die Pfropfgrundlage auf, so daß sich gezielt und kontrollierbar Pfropfcopolymere mit definierter Struktur aufbauen lassen. Durch den beidseitig symmetrischen kovalenten Einbau von Initiatoren der allgemeinen Formel (8) in das zu pfropfende Polymer, wobei die Initiatoren zu Radikalen zerfallen und dann Pfropfcopolymerisationen einleiten können, ist eine Homopolymerisation des Pfropfmonomeren nur in sehr geringem Umfang und nur durch Übertragungsreaktionen möglich.

Das erfindungsgemäße Verfahren zur Herstellung von Pfropfcopolymerisaten, kann in Substanz oder in Gegenwart organischer Lösungsmittel durchgeführt werden, wobei die erfindungsgemäßen Organopolysiloxane teilweise oder vollständig gelöst sein können. Vorzugsweise werden als Lösungsmittel Ether, wie Tatrahydrofuran und Dioxan oder Kohlenwasserstoffe, wie Toluol eingesetzt. Organische Lösungsmittel werden vorzugsweise in der 0- bis 10-fachen Gewichtsmenge, insbesondere in der 1- bis 3-fachen Menge der erfindungsgemäßen Organopolysiloxane eingesetzt.

Die erfindungsgemäßen Organopolysiloxane können gegebenenfalls zusammen mit Lösungsmittel vorgelegt werden. Alle Komponenten des Verfahrens können aber auch vermischt werden, bevor der Radikalmakroinitiator aktiviert wird.

Die Umsetzung findet vorzugsweise unter Ausschluß von Feuchtigkeit und Sauerstoff statt. Die Reaktionsmischung wird vorzugsweise 10 bis 90 Minuten mit Stickstoff gesättigt, der pH-Wert sollte vorzugsweise 7 - 9 betragen, bevor der Radikalmakroinitiator aktiviert wird. Vorzugsweise werden ethylenisch ungesättigte organische Monomere in einer Menge zudosiert, die 20 - 80 Gew.-%, bezogen auf das Gesamtgewicht des Pfropfcopolymerisats, beträgt. Als Monomere für den organischen Polymeranteil werden vorzugsweise Acrylsäure, Methacrylsäure, Acrylsäureester oder Methacrylsäureester von aliphatischen Alkoholen und Diolen mit 1 - 10 C-Atomen, Acrylnitril, Styrol, p-Methylstyrol, $\alpha$-Methylstyrol, Vinylacetat, Vinylpropionat, Maleinimid, Vinylpyrrolidon, Vinylchlorid, Ethylen, Butadien, Isopren und Chloropren eingesetzt. Besonders bevorzugt sind Styrol sowie Acrylsäureester und Methacrylsäureester von aliphatischen Alkoholen mit 1 - 4 C-Atomen, beispielsweise Methyl(meth)-acrylat, Ethyl(meth)acrylat oder Butyl(meth) acrylat und Ethylenglykoldi(meth)acrylat. Als organischer Polymeranteil sind sowohl Homopolymerisate als auch Mischpolymerisate der genannten Monomere geeignet. Die Pfropfpolymerisation mit Monomeren, welche zwei ethylenische Doppelbindungen enthalten, führt zu vernetzten Pfropfpolymerisaten.

Die Pfropfung auf die Organopolysiloxan-Radikalmakroinitiatoren wird vorzugsweise durch Temperaturerhöhung auf 50 - 110°C, bevorzugt 80 - 95°C, gestartet. Zur vollständigen Polymerisation wird die Starttemperatur für 30 Minuten bis 8 Stunden, bevorzugt 1 - 2 Stunden, beibehalten. Restmengen an nichtumgesetztem Organomonomer können anschließend durch Destillation, gegebenenfalls gemeinsam mit dem Lösungsmittel entfernt werden, was bevorzugt ist.

Ein weiterer Gegenstand der Erfindung sind die nach dem erfindungsgemäßen Verfahren erhältlichen Pfropfcopolymerisate.

Pfropfcopolymerisate, deren Organopolysiloxananteile Vinylgruppen und an Silicium gebundenen Wasserstoff enthalten, können nachträglich durch Platinkatalysatoren im Zuge einer Hydrosilylierung vernetzt werden.

Die Molmassen der erfindungsgemäßen Pfropfcopolymerisate liegen bevorzugt bei $10^4$ bis $10^7$ g/Mol, insbesondere $5 \cdot 10^4$ bis $5 \cdot 10^5$ g/Mol.

Die nach dem erfindungsgemäßen Verfahren hergestellten Pfropfcopolymerisate weisen einen definierten Aufbau durch gezielte Anbindung der Organopolymerketten an die Siliconpfropfgrundlage und (Silicon-)Kern-(Organopolymer-) Schale-Struktur auf. In Abhängigkeit vom Gehalt an Einheiten der allgemeinen Formel (1) und damit von der Pfropfstellendichte auf dem Organopolysiloxan bilden sich stern- bis bürstenförmige Pfropfcopolymerstrukturen aus. Pfropfcopolymerisate, die durch Pfropfung auf einen weichen, wenig vernetzten Siliconelastomerkern hergestellt worden sind, weisen auch vermehrt Organopolymerketten im Inneren des Siliconelastomerkerns auf und zeigen die Eigenschaften von interpenetrating networks. Die Pfropfcopolymerisate sind in organischen Lösungsmitteln, insbesondere in den zur Pfropfpolymerisationen geeigneten Lösungsmitteln gut löslich und thermoplastisch verarbeitbar. Ferner zeigen die nach erfindungsgemäßem Verfahren hergestellten Pfropfcopolymerisate eine deutlich verbesserte Anbindung des Organopolymers an die Siliconpfropfgrundlage und damit einen erheblich niedrigeren Anteil an freiem Organopolymer-Homopolymerisat als entsprechende Pfropfcopolymerisate, die dem Stand der Technik gemäß nach der "grafting onto"-Methode hergestellt wurden.

Die erfindungsgemäßen Pfropfcopolymere eignen sich vor allem zur Anwendung als modifizierte Thermoplaste oder zur Verwendung als Additive zur Polymermodifizierung.

In den nachfolgenden Beispielen sind, falls jeweils nicht anders angegeben,

a) alle Mengenangaben auf das Gewicht bezogen;
b) alle Drücke 0,10 MPa (abs.);
c) alle Temperaturen 20° C.

Die nachstehenden Abkürzungen wurden verwendet:

d.Th. = der Theorie
p.A. = zur Analyse

Beispiele

**Organopolysiloxan-Radikalmakroinitiatoren**

**Beispiel 1**:

7,5 g (23,6 mmol) 4,4'-Azobis(4-cyanopentansäurechlorid) wurden in 20 ml Dichlormethan gelöst und filtriert. Die Lösung wurde langsam bei -10°C zu einer Mischung von 11,67 g (47,2 mmol) Methylaminopropyltriethoxysilan und 5,26 g (52 mmol) Triethylamin in 500 ml wasserfreiem Diethylether getropft und noch 1 Stunde bei -10 °C nachreagieren gelassen. Das entstandene weiße Präzipitat wurde abfiltriert und das Produkt enthaltende klare Filtrat bei 25 °C im Hochvakuum bis zur Gewichtskonstanz eingeengt. Man erhielt 15 g (89 % d. Th.) leicht gelbes, kristallines Produkt (Azo I).

Beispiel 2:

Die Verfahrensweise von Beispiel 1 wurde wiederholt, mit der Änderung, daß anstatt 11,67 g (47,2 mmol) Methylaminopropyltriethoxysilan, 14,40 g (47,2 mmol) Cyclohexylaminopropyltriethoxysilan verwendet wurden. Man erhielt 16 g (97 % d. Th.) gelbes, flüssiges Produkt (Azo II).

Beispiel 3:

10,45 g Tetraethoxysilan (50 mmol), 1,61 g (10 mmol) Hexamethyldisilazan und 0,6 g (0,84 mmol) Azo I wurden unter Lichtausschluß bei Raumtemperatur in einem Reaktionsgefäß vorgelegt. Danach wurde eine Mischung von 8 g (174 mmol) Ethanol (p. A.) und 1,8 g (100 mmol) Wasser schnell zugetropft. Die Reaktionsmischung wurde 4 Stunden bei Raumtemperatur im geschlossenen Reaktionsgefäß gerührt, dann das Reaktionsgefäß geöffnet und bei Raumtemperatur unter Luftatmosphäre weitere 20 Stunden gerührt. Das Rohprodukt wurde filtriert und die klare Lösung bei 38°C im Hochvakuum bis zur Gewichtskonstanz eingeengt. Man erhielt 4,81 g (95,6 % d. Th.) transparentes, festes Produkt (MQ I).

Beispiel 4:

Die Verfahrensweise von Beispiel 3 wurde wiederholt, mit der Änderung, daß anstatt 1,61 g (10 mmol) Hexamethyldisilazan, 2,83 g (17,5 mmol) Hexamethyldisilazan und anstatt 0,6 g (0,84 mmol) Azo I 0,66 g (0,92 mmol) Azo I verwendet wurden. Man erhielt 6,2 g (98 % d. Th.) transparentes, flüssiges Produkt (MQ II).

Beispiel 5:

Die Verfahrensweise von Beispiel 3 wurde wiederholt, mit der Änderung, daß anstatt 1,61 g (10 mmol) Hexamethyldisilazan, 2,02 g (12.5 mmol) Hexamethyldisilazan und anstatt 0,6 g (0,84 mmol) Azo I, 0,62 g (0,87 mmol) Azo I verwendet wurden. Man erhielt 5,4 g (99 % d. Th.) transparentes, festes Produkt (MQ III).

Beispiel 6: (basische Nachkondensation)

38 g MQ III aus Beispiel 5 wurden in 150 ml Toluol unter Lichtausschluß gelöst und mit 937 µl (500 ppm) einer 23 %igen methanolischen Kaliumhydroxidlösung versetzt. Die Reaktionslösung wurde 48 Stunden bei Raumtemperatur gerührt. Danach wurden 4 g eines sauren Neutralisationsmittels zugegeben und weitere 30 Minuten bei Raumtemperatur gerührt. Nach der Filtration wurde das klare Filtrat bei 38 °C im Hochvakuum bis zur Gewichtskonstanz eingeengt. Man erhielt 34 g (89,5 % d.Th.) transparentes Pulver (MQ III K).

Beispiel 7:

52,08 g (250 mmol) Tetraethoxysilan, 10,09 g (62,5 mmol) Hexamethyldisilazan, 1,86 g Azo I (2,6 mmol), 5,79 g (31,25 mmol) Divinyltetramethyldisilazan und 4,2 g Dihydrogentetramethyldisiloxan (31,25 mmol) wurden unter Lichtausschluß bei Raumtemperatur in einem Reaktionsgefäß vorgelegt. Danach wurde eine Mischung von 40 g (870 mmol) Ethanol p.A. und 9 g (500 mmol) Wasser schnell zugetropft. Die Reaktionsmischung wurde 4 Stunden bei Raumtemperatur im geschlossenen Reaktionsgefäß gerührt, dann das Reaktionsgefäß geöffnet und bei Raumtemperatur unter Luftatmosphäre weitere 20 Stunden gerührt. Das Rohprodukt wurde filtriert und die klare Lösung bei 40 °C im Hochvakuum bis zur Gewichtskonstanz eingeengt.

Man erhielt 31,42 g (94 % d. Th.) transparentes, flüssiges Produkt (MQ IV).

Beispiel 8: (saure Nachkondensation)

31,0 g MQ IV aus Beispiel 7 wurden in 130 ml Toluol gelöst und mit 364,5 µl (500 ppm) einer 37 %igen wäßrigen Salzsäure versetzt. Die Reaktionslösung wurde 72 Stunden unter Lichtausschluß bei Raumtemperatur gerührt und anschließend mit 1,5 g (37 mmol) Magnesiumoxid neutralisiert. Nach der Filtration wurde das klare Filtrat bei 38 °C im Hochvakuum bis zur Gewichtskonstanz eingeengt. Man erhielt 17,23 g (55,5 % d. Th.) transparentes, viskoses Produkt (MQ IV K).

Beispiel 9:

Die Verfahrensweise von Beispiel 3 wurde wiederholt, mit der Änderung, daß anstatt 1,61 g (10 mmol) Hexamethyldisilazan, 14,1 g (87,5 mmol) Hexamethyldisilazan, anstatt 10,45 g (50 mmol) Tetraethoxysilan, 73,15 g (350 mmol) Tetraethoxysilan und anstatt 0,6 g (0,84 mmol) Azo I, 2,62 g (3,7 mmol) Azo I verwendet wurden. Zugegeben wurden anstatt 8 g (174 mmol) Ethanol, 56 g (1222 mmol) Ethanol und anstatt 1,8 g (100 mmol) Wasser, 12,6 g (700 mmol) Wasser. Man erhielt 38 g (99 % d. Th.) transparentes, festes Produkt (MQ V). MQ V wurde analog Beispiel 6 nachkondensiert. Man erhielt 34,5 g (91 % d. Th.) festes transparentes Pulver (MQ V K).

Beispiel 10:

6,24 g (30 mmol) Tetraethoxysilan, 17,76 g (120 mmol) Dimethyldiethoxysilan, 6,06 g (37,5 mmol) Hexamethyldisilazan und 0,902 g (1,3 mmol) Azo I wurden unter Lichtausschluß bei Raumtemperatur in einem Reaktionsgefäß vorgelegt. Danach wurde eine Mischung von 24 g (588 mmol) Ethanol und 5,4 g (300 mmol) Wasser schnell zugetropft. Die Reaktionsmischung wurde 24 Stunden bei Raumtemperatur im geschlossenen Reaktionsgefäß gerührt. Das Rohprodukt wurde filtriert und die klare Lösung bei 38 °C im Hochvakuum bis zur Gewichtskonstanz eingeengt. an erhielt 6,3 g (36 % d. Th.) eines gelben, flüssigen Produktes (MQ VI), das analog Beispiel 6 nachkondensiert wurde. Man erhielt 5 g (79 % d. Th.) flüssiges Produkt (MQ VIK).

## Pfropfcopolymerisate

Beispiel 11:

Ein 100 ml Schlenkkolben wurde dreimal ausgeheizt und evakuiert und danach mit Stickstoff gespült. Unter Inertgas wurden 3,5 g (35 mmol) entstabilisiertes Methylmethacrylat und 1,5 g MQ VIK aus Beispiel 10 gefüllt. Nach Zugabe von 10 g Toluol als Lösungsmittel wurde die Lösung in flüssigem Stickstoff eingefroren, im Hochvakuum evakuiert und langsam wieder aufgetaut. Nachdem die Reaktionsmischung flüssig geworden war, wurde der Kolben mit Stickstoff gespült. Die beschriebenen Schritte zur Entgasung des Systems wurden insgesamt dreimal wiederholt.

Die Lösung wurde sodann unter Schutzgas und Rühren 24 Stunden bei 90 °C polymerisiert, wobei sie hochviskos wurde. Nach der Reaktionszeit wurde mit Toluol verdünnt und langsam unter Rühren in 100 ml Methanol gefällt. Der weiße voluminöse Niederschlag wurde nach dem Absaugen erneut in Toluol gelöst und in 100 ml Methanol gefällt. Das Pfropfcopolymer wurde abfiltriert und im Hochvakuum getrocknet. Man erhielt 2,33 g (47 % d. Th.) weißes Pulver.

Beispiel 12:

Die Verfahrensweise von Beispiel 11 wurde wiederholt, mit der Änderung, daß anstatt 1,5 g MQ VIK, 6 g MQ IVK aus Beispiel 8, 2,6 g (30 mmol) Methylmethacrylat anstatt 3,5 g, 15 g Toluol anstatt 10 g Toluol verwendet wurden. Man erhielt 3 g (35 % d. Th.) eines weißen Pulvers (P 1).

Beispiel 13:

Die Verfahrensweise von Beispiel 11 wurde wiederholt, mit der Änderung, daß anstatt 1,5 g MQ VIK, 1,5 g MQ VK aus Beispiel 9, anstatt 3,5 g Methylmethacrylat, 3,5 g (17,7 mmol) entstabilisiertes Ethylenglykoldimethacrylat und anstatt 10 g Toluol, 20 g Toluol verwendet wurden. Man erhielt 25 g (100 % d. Th.) eines steifen, transparenten, unlöslichen Gels.

Beispiel 14:

Die Verfahrensweise von Beispiel 11 wurde wiederholt, mit der Änderung, daß anstatt 1,5 g MQ VIK, 1,0 g MQ VK aus Beispiel 9, anstatt 3,5 g Methylmethacrylat, 9 g (87 mmol) entstabilisiertes Styrol und anstatt 10 g Toluol, 20 g Toluol verwendet wurden. Man erhielt 2,45 g (25 % d. Th.) eines weißen Pulvers.

Beispiel 15:

Die Verfahrensweise von Beispiel 14 wurde wiederholt, mit der Änderung, daß anstatt 1,0 g MQ VK, 5 g MQ VK und anstatt 9 g Styrol, 5 g Styrol verwendet wurden. Man erhielt 5,0 g (50 % d. Th.) eines weißen Pulvers.

Beispiel 16:

Die Verfahrensweise von Beispiel 11 wurde wiederholt, mit der Änderung, daß anstatt 1,5 g MQ VIK, 3 g MQ IIIK aus Beispiel 6, anstatt 3,5 g Methylmethacrylat, 7 g (81 mmol) entstabilisiertes Vinylacetat und anstatt 10 g Toluol, 20 g Toluol verwendet wurden. Man erhielt 2,5 g (25 % d. Th.) eines gelben Feststoffes.

Beispiel 17:

Die Verfahrensweise von Beispiel 11 wurde wiederholt, mit der Änderung, daß anstatt 1,5 g MQ VIK, 1,5 g MQ VK aus Beispiel 9 verwendet wurde. Man erhielt 3,2 g (64 % d. Th.) eines weißen Pulvers.

Beispiel 18:

Die Verfahrensweise von Beispiel 11 wurde wiederholt, mit der Änderung, daß anstatt 1,5 g MQ VIK, 5 g MQ VK aus Beispiel 9, anstatt 3,5 g Methylmethacrylat, 5 g (39 mmol) entstabilisierter Acrylsäure-n-butylester und anstatt 10 g Toluol, 20 g Toluol verwendet wurden. Man erhielt 4,87 g (49 % d. Th.) eines klebrigen, transparenten Feststoffes.

Beispiel 19: (Vernetzung)

2 g P 1 aus Beispiel 12 wurden in 10 g Toluol gelöst und mit 100 ppm (bezogen auf reines Platin) eines Platinkatalysators, bestehend aus Hexachloroplatinsäure und Divinyltetramethyldisiloxan, versetzt. Nach 2 Stunden erhielt man ein unlösliches, leicht gelbes, transparentes Gel.

**Patentansprüche**

1. Teilvernetzte, radikalbildende Gruppen aufweisende Organopolysiloxane, aufgebaut aus 0,2 bis 50,0 Gew.-% Einheiten der allgemeinen Formel

$$[R_aSi(O_{(3-a)/2})\text{-}R^1\text{-}X\text{-}R^1\text{-}Si(O_{(3-a)/2})R_a] \qquad \textbf{(1)},$$

0 bis 80,0 Gew.-% Einheiten der allgemeinen Formel

$$[R^2{}_3SiO_{1/2}] \qquad \textbf{(2)},$$

0 bis 99,3 Gew.-% Einheiten der allgemeinen Formel

$$[R^2{}_2SiO_{2/2}] \qquad \textbf{(3)},$$

0 bis 99,8 Gew.-% Einheiten der allgemeinen Formel

$$[R^2SiO_{3/2}] \qquad \textbf{(4)},$$

und 0 bis 80,0 Gew.-% Einheiten der allgemeinen Formel

$$[SiO_{4/2}] \quad \textbf{(5)},$$

wobei

**R** gleiche oder verschiedene einwertige SiC-gebundene, gegebenenfalls substituierte $C_1$- bis $C_{18}$-Kohlenwasserstoffreste,
**$R^1$** gleiche oder verschiedene zweiwertige SiC-gebundene, gegebenenfalls substituierte $C_1$- bis $C_{18}$-Kohlenwasserstoffreste, welche durch zweibindige, beidseitig an Kohlenstoffatome gebundene Reste aus der Gruppe -O-, -COO-, -OOC-, $-CONR^2-$, $-NR^2CO-$, $-NR^2-$ und -CO- unterbrochen sein können,
**$R^2$** ein Wasserstoffatom oder einen Rest R,
**X** einen Rest aus der Gruppe -N=N-, -O-O-, -S-S- und $-C(C_6H_5)_2-C(C_6H_5)_2-$, und
**a** die Werte 0, 1 oder 2 bedeuten, mit der Maßgabe, daß die Summe der Einheiten der allgemeinen Formeln (4) und (5) mindestens 0,5 Gew.-% beträgt und daß in 100 ml Toluol bei 20°C mindestens 15 g der Organopolysiloxane löslich sind.

**2.** Organopolysiloxane nach Anspruch 1, wobei die Einheiten der allgemeinen Formel (1) der allgemeinen Formel (1a)

$$[(CH_3)_aSi(O_{(3-a)/2})-(CH_2)_3-N(R^3)-C(O)-(CH_2)_2-C(CN)(CH_3)-N=]_2$$

entsprechen, in der

**$R^3$** ein Wasserstoffatom oder gleiche oder verschiedene einwertige SiC-gebundene, gegebenenfalls substituierte $C_1$-$C_6$-Kohlenwasserstoffreste bedeutet und
**a** die vorstehenden Bedeutungen aufweist.

**3.** Verfahren zur Herstellung der Organopolysiloxane gemäß Anspruch 1 oder 2, bei dem eine Mischung aus den Komponenten

A) Organosilanen der allgemeinen Formel

$$R_aSi((OR^4)_{3-a})-R^1-X-R^1-Si(OR^4)_{3-a}R^a \quad \textbf{(8)},$$

B) Organosiliciumverbindungen, die ausgewählt werden aus

B1) Organosilanen der allgemeinen Formel

$$R^2{}_bSi(OR^4)_{(4-b)} \quad \textbf{(9)},$$

und
B2) Organosiloxanen aus Einheiten der allgemeinen Formel

$$R^2{}_c(OR^4)_dSiO_{(4-c-d)/2}, \quad \textbf{(10)},$$

C) mindestens 0,5 Mol Wasser pro Mol Alkoxygruppen in den Komponenten A und B und gegebenenfalls
D) mit Wasser mischbarem Lösungsmittel,
E) in Gegenwart von Ammoniak oder primärem oder sekundärem $C_1$-$C_4$-Alkylamin oder einer Verbindung, welche mit Wasser Ammoniak oder primäres oder sekundäres $C_1$-$C_4$-Alkylamin freisetzt,
wobei in den allgemeinen Formeln (8) bis (10)

**$R^4$** die Bedeutungen von **$R^2$** aufweist,
**b, c** und **d** jeweils die Werte 0, 1, 2 oder 3 bedeuten, und

**R, $R^1$, $R^2$, X** und **a** die vorstehenden Bedeutungen aufweisen, mit der Maßgabe, daß Komponente B mindestens 0,01 Mol Alkoxygruppen pro Mol Siliciumatome aufweist, umgesetzt wird.

**4.** Verfahren nach Anspruch 3, wobei als Komponente E Verbindungen der allgemeinen Formeln (11) bis (15)

$$R^5{}_nSiZ_{4-n}, \qquad \textbf{(11)}$$

$$(R^5{}_3Si)_2NH, \qquad \textbf{(12)}$$

$$(R^5{}_2SiNH)_x, \qquad \textbf{(13)}$$

$$(R^5{}_3Si)_2NR^6 \qquad \textbf{(14)}$$

und

$$(R^5{}_2SiNR^6)_y, \qquad \textbf{(15)}$$

wobei

**$R^5$** ein Wasserstoffatom, einen $C_1$- bis $C_4$-Alkylrest oder Vinylrest,
**$R^6$** einen $C_1$- bis $C_4$-Alkylrest,
**Z** die Gruppe $-NHR^6$ oder $NR^6_2$,
**n** die Werte 2 oder 3,
**x** ganze Zahlen von 3 bis 6 und
**y** ganze Zahlen von 1 bis 12 bedeuten, eingesetzt werden.

**5.** Verfahren zur Herstellung von Pfropfcopolymerisaten, bei dem

95 bis 5 Gew.-% an Organopolysiloxanen gemäß Anspruch 1 oder 2 oder gemäß Anspruch 3 oder 4 hergestellten Organopolysiloxanen mit
5 bis 95 Gew.-% an ethylenisch ungesättigte Monomeren umgesetzt werden.

**6.** Verfahren nach Anspruch 5, bei dem als ethylenisch ungesättigte Monomeren Acrylsäure, Methacrylsäure, Acrylsäureester oder Methacrylsäureester von aliphatischen Alkoholen und Diolen mit 1 - 10 C-Atomen, Acrylnitril, Styrol, p-Methylstyrol, α-Methylstyrol, Vinylacetat, Vinylpropionat, Maleinimid, Vinylpyrrolidon, Vinylchlorid, Ethylen, Butadien, Isopren oder Chloropren eingesetzt werden.

**7.** Pfropfcopolymerisate, erhältlich nach dem Verfahren gemäß Anspruch 5 oder 6.

## Revendications

**1.** Organopolysiloxanes partiellement réticulés renfermant des groupes générateurs de radicaux, composés de 0,2 à 50,0% en poids de motifs de formule générale

$$[R_aSi(O_{(3-a)/2})-R^1-X-R^1-Si(O_{(3-a)/2})R_a] \qquad (1),$$

0 à 80,0% en poids de motifs de formule générale

$$[R^2{}_3SiO_{1/2})] \qquad (2),$$

0 à 99,3% en poids de motifs de formule générale

$$[R^2{}_2SiO_{2/2}] \quad (3),$$

0 à 99,8% en poids de motifs de formule générale

$$[R^2SiO_{3/2}] \quad (4)$$

et 0 à 80,0% en poids de motifs de formule générale

$$[SiO_{4/2}] \quad (5),$$

dans lesquelles

R représente des radicaux hydrocarbonés en $C_1$ à $C_{18}$ monovalents, identiques ou différents, liés à SiC et éventuellement substitués,
$R^1$ représente des radicaux hydrocarbonés en $C_1$ à $C_{18}$ bivalents, identiques ou différents, liés à SiC et éventuellement substitués, qui peuvent être interrompus par des radicaux bivalents, liés des deux côtés à des atomes de carbone, choisis parmi le groupe constitué de -O-, -COO-, -OOC-, $-CONR^2-$, $-NR^2CO-$, $-NR^2-$ et -CO-,
$R^2$ représente un atome d'hydrogène ou un radical R,
X représente un radical choisi parmi le groupe constitué de -N=N-, -O-O-, -S-S- et $-C(C_6H_5)_2-C(C_6H_5)_2-$, et
a vaut 0, 1 ou 2,

à condition que la somme des motifs de formules générales (4) et (5) soit d'au moins 0,5% en poids et qu'au moins 15 g des organopolysiloxanes soient solubles dans 100 ml de toluène à 20°C.

**2.** Organopolysiloxanes selon la revendication 1, dans lesquels les motifs de formule générale (1) sont conformes à la formule générale (1a)

$$[(CH_3)_aSi(O_{(3-a)/2)}-(CH_2)_3-N(R^3)-C(O)-(CH_2)_2-C(CN)(CH_3)-N=]_2$$

dans laquelle

$R^3$ représente un atome d'hydrogène ou des radicaux hydrocarbonés en $C_1$-$C_6$ monovalents, identiques ou différents, liés à SiC et éventuellement substitués, et
a est comme défini ci-dessus.

**3.** Procédé de préparation des organopolysiloxanes selon la revendication 1 ou 2, dans lequel on fait réagir un mélange des composants

A) des organosilanes de formule générale

$$R_aSi((OR^4)_{3-a})-R^1-X-R^1-Si(OR^4)_{3-a}R_a \quad (8),$$

B) des composés organosiliciés, qui sont choisis parmi

B1) des organosilanes de formule générale

$$R^2{}_bSi(OR^4)_{(4-b)} \quad (9),$$

et

B2) des organosiloxanes à base de motifs de formule générale

$$R^2_c(OR^4)_dSiO_{(4-c-d)/2}, \quad (10),$$

C) au moins 0,5 mol d'eau par mole de groupes alcoxy dans les composants A et B, et éventuellement

D) un solvant miscible à l'eau,

E) en présence d'ammoniac ou d'une alkylamine en $C_1$-$C_4$ primaire ou secondaire ou d'un composé qui libère de l'ammoniac ou une alkylamine en $C_1$-$C_4$ primaire ou secondaire avec de l'eau,

où, dans les formules générales (8) à (10),

| | |
|---|---|
| $R^4$ | est comme défini pour $R^2$, |
| b, c et d | valent chacun 0, 1, 2 ou 3, et |
| $R, R^1, R^2$, X et a | sont comme définis ci-dessus, |

à condition que le composant B renferme au moins 0,01 mol de groupes alcoxy par mole d'atomes de silicium.

**4.** Procédé selon la revendication 3, dans lequel on utilise, en tant que composant E, des composés de formules générales (11) à (15)

$$R^5_nSiz_{4-n}, \quad (11),$$

$$(R^5_nSi)_2NH, \quad (12),$$

$$(R^5_2SiNH)_x, \quad (13),$$

$$(R^5_3Si)_2NR^6 \quad (14),$$

et

$$R^5_2SiNR_6)_y, \quad (15),$$

dans lesquelles

| | |
|---|---|
| $R^5$ | représente un atome d'hydrogène, un radical alkyle en $C_1$ à $C_4$ ou un radical vinyle, |
| $R^6$ | représente un radical alkyle en $C_1$ à $C_4$, |
| Z | représente le groupe $-NR^6$ ou $NR^6_2$, |
| n | vaut 2 ou 3, |
| x | représente des entiers de 3 à 6 et |
| y | représente des entiers de 1 à 12. |

**5.** Procédé de préparation de copolymères greffés dans lequel on fait réagir

de 95 à 5% en poids d'organopolysiloxanes selon la revendication 1 ou 2 ou d'organopolysiloxanes préparés selon la revendication 3 ou 4 avec

de 5 à 95% en poids de monomères éthyléniquement insaturés.

**6.** Procédé selon la revendication 5, dans lequel on utilise, en tant que monomères éthyléniquement insaturés, l'acide acrylique, l'acide méthacrylique, des acrylates ou méthacrylates d'alcools et de diols aliphatiques ayant de 1 à 10 atomes de carbone, l'acrylonitrile, le styrène, le p-méthylstyrène, l'$\alpha$-méthylstyrène, l'acétate de vinyle, le propionate de vinyle, le maléimide, la vinylpyrrolidone, le chlorure de vinyle, l'éthylène, le butadiène, l'isoprène ou le

chloroprène.

7. Copolymères greffés pouvant être obtenus par le procédé selon la revendication 5 ou 6.

## Claims

1. Partially crosslinked organopolysiloxanes containing radical-forming groups, composed of from 0.2 to 50.0% by weight of units of the general formula

$$[R_aSi(O_{(3-a)/2})\text{-}R^1\text{-}X\text{-}R^1\text{-}Si(O_{(3-a)/2})R_a] \qquad (1),$$

from 0 to 80.0% by weight of units of the general formula

$$[R^2{}_3SiO_{1/2}] \qquad (2),$$

from 0 to 99.3% by weight of units of the general formula

$$[R^2{}_2SiO_{2/2}] \qquad (3),$$

from 0 to 99.8% by weight of units of the general formula

$$[R^2SiO_{3/2}] \qquad (4)$$

and from 0 to 80.0% by weight of units of the general formula

$$[SiO_{4/2}] \qquad (5),$$

where

R radicals denote identical or different monovalent SiC-bonded, optionally substituted $C_1$ to $C_{18}$ hydrocarbon radicals,
$R^1$ radicals denote identical or different divalent SiC-bonded, optionally substituted $C_1$ to $C_{18}$ hydrocarbon radicals which may be interrupted by divalent radicals, attached on both sides to carbon atoms, from the group consisting of -O-, -COO-, -OOC-, -CONR$^2$-, -NR$^2$CO-, -NR$^2$- and -CO-,
$R^2$ de notes a hydrogen atom or a radical R,
X denotes a radical from the group consisting of -N=N-, -O-O-, -S-S- and $-C(C_6H_5)_2-C(C_6H_5)_2-$, and
a denotes the value 0, 1 or 2,

with the proviso that the sum of the units of the general formulae (4) and (5) is at least 0.5% by weight and that at least 15 g of the organopolysiloxanes are soluble in 100 ml of toluene at 20°C.

2. Organopolysiloxanes according to Claim 1, in which the units of the general formula (1) conform to the general formula (1a)

$$[(CH_3)_aSi(O_{(3-a)/2})\text{-}(CH_2)_3\text{-}N(R^3)\text{-}C(O)\text{-}(CH_2)_2\text{-}C(CN)(CH_3)\text{-}N{=}]_2$$

in which

$R^3$ denotes a hydrogen atom or identical or different monovalent SiC-bonded, optionally substituted $C_1$-$C_6$ hydrocarbon radicals and

a is as defined above.

**3.** Process for the preparation of organopolysiloxanes according to Claim 1 or 2, in which a mixture is reacted of the components

A) organosilanes of the general formula

$$R_aSi((OR^4)_{3-a})-R^1-X-R^1-Si(OR^4)_{3-a}R_a \quad (8),$$

B) organosilicon compounds selected from

B1) organosilanes of the general formula

$$R^2{}_bSi(OR^4)_{(4-b)} \quad (9),$$

and
B2) organosiloxanes comprising units of the general formula

$$R^2{}_c(OR^4)_dSiO_{(4-c-d)/2}, \quad (10),$$

C) at least 0.5 mol of water per mole of alkoxy groups in components A and B and, if desired,
D) water-miscible solvent,
E) in the presence of ammonia or primary or secondary $C_1$-$C_4$-alkylamine or of a compound which, with water, liberates ammonia or primary or secondary $C_1$-$C_4$-alkylamine,

where, in the general formulae (8) to (10),

| | |
|---|---|
| $R^4$ | is as defined for $R^2$, |
| b, c and d | each denote the values 0, 1, 2 or 3, and |
| R, $R^1$, $R^2$, X | and a are as defined above, |

with the proviso that component B contains at least 0.01 mol of alkoxy groups per mole of silicon atoms.

**4.** Process according to Claim 3, which comprises employing as component E compounds of the general formulae (11) to (15)

$$R^5{}_nSiZ_{4-n}, \quad (11)$$

$$(R^5{}_3Si)_2NH, \quad (12)$$

$$(R^5{}_2SiNH)_x, \quad (13)$$

$$(R^5{}_3Si)_2NR^6 \quad (14)$$

and

$$(R^5{}_2SiNR^6)_y, \quad (15)$$

where

$R^5$ denotes a hydrogen atom, a $C_1$- to $C_4$-alkyl radical or the vinyl radical,
$R^6$ denotes a $C_1$- to $C_4$-alkyl radical,
Z denotes the group $-NHR^6$ or $NR^6_2$,
n denotes the values 2 or 3,
x denotes integers from 3 to 6, and
y denotes integers from 1 to 12.

**5.** Process for the preparation of graft copolymers, in which

from 95 to 5% by weight of an organopolysiloxane according to Claim 1 or 2 or of an organopolysiloxane prepared according to Claim 3 or 4 are reacted with
from 5 to 95% by weight of ethylenically unsaturated monomers.

**6.** Process according to Claim 5, in which the ethylenically unsaturated monomers employed are acrylic acid, methacrylic acid, acrylates or methacrylates of aliphatic alcohols and diols having 1 - 10 carbon atoms, acrylonitrile, styrene, p-methylstyrene, α-methylstyrene, vinyl acetate, vinyl propionate, maleimide, vinylpyrrolidone, vinyl chloride, ethylene, butadiene, isoprene or chloroprene.

**7.** Graft copolymer obtainable by the process according to Claim 5 or 6.